Europäisches Patentamt

European Patent Office

Office européen des brevets

(19)

(11) Veröffentlichungsnummer: **0 146 770**
**B1**

(12) **EUROPÄISCHE PATENTSCHRIFT**

(45) Veröffentlichungstag der Patentschrift:
**19.11.87**

(51) Int. Cl.⁴: **G 03 B 35/22,** G 02 B 13/08

(21) Anmeldenummer: **84113881.1**

(22) Anmeldetag: **23.08.82**

(60) Veröffentlichungsnummer der früheren Anmeldung
nach Art. 76 EPÜ: **0086790**

(54) **Vorsatzobjektiv zur Projektion von stereoskopischen, anamorphotisch komprimierten Bildpaaren auf eine gekrümmte Breitwandfläche.**

(30) Priorität: **24.08.81 CH 5452/81**
**23.09.81 CH 6177/81**
**05.08.82 CH 4725/82**

(43) Veröffentlichungstag der Anmeldung:
**03.07.85 Patentblatt 85/27**

(45) Bekanntmachung des Hinweises auf die Patenterteilung:
**19.11.87 Patentblatt 87/47**

(84) Benannte Vertragsstaaten:
**AT BE CH DE FR GB IT LI LU NL SE**

(56) Entgegenhaltungen:
**DE - B - 1 045 682**
**DE - B - 1 061 091**
**DE - B - 1 168 113**
**DE - B - 1 180 159**
**FR - A - 714 994**
**FR - A - 962 737**
**FR - A - 1 108 831**
**GB - A - 1 179 854**
**US - A - 2 184 018**
**US - A - 2 854 891**
**US - A - 3 152 209**

(73) Patentinhaber: **MEIER, Walter, Stöckenstrasse 29,**
**CH-8903 Birmensdorf (CH)**

(72) Erfinder: **Meier, Walter, Stöckenstrasse 29,**
**CH-8903 Birmensdorf (CH)**
Erfinder: **Jacobsen, Jan, Ludwig Rif Strasse 9,**
**D-8901 Reutern (DE)**

(74) Vertreter: **Punschke und Frei Patentanwälte,**
**Hedwigsteig 6 Postfach 95, CH-8029 Zürich (CH)**

### Beschreibung

Die Erfindung liegt im Gebiet der optischen Abbildung und betrifft ein afokales Vorsatzsystem gemäss Oberbegriff des Patentanspruchs 1.

Bei Filmaufführungen wird vielfach versucht, dem Betrachter den Eindruck zu vermitteln, er wäre in das lichtbildnerisch dargestellte Geschehen miteinbezogen. Die Attraktivität der möglichst wirklichkeitsnahen Darstellung eines meist optisch-dramatischen Ablaufs, wie beispielsweise auf den Betrachter zufliegende Gegenstände, abschüssige Fahrten, die den Betrachter zu mannigfaltigen Reaktionen veranlassen, haben zu zahlreichen technischen Lösungen auf diesem Gebiet geführt.

Sehr früh bemühte man sich, bei der kinematographischen Darstellung einen räumlichen Eindruck zu erzeugen. Im Jahre 1909 wurde durch die FR-A-398 746 ein Verfahren mit Vorrichtung bekannt, um eine plastische Bildwirkung zu erhalten. Dazu wurden auf einen Film aufgenommene stereoskopische Bildpaare durch zwei zueinander geneigte Projektionsobjektive möglichst exakt überlagert projiziert. Der vorgeschlagene Projektor arbeitet mit zwei getrennten Lichtquellen. In einer vereinfachten Version wird vorgeschlagen, das Licht aus einer Quelle auf beide Objektive gleichmässig zu verteilen. Die Lichtausbeute war offensichtlich noch kein Thema.

Weiterhin wurde durch die US-A-3 425 775 ein neuer Stereoprojektor für Breitwandprojektion bekannt. Während es damals üblich war, die mittels Zylinderanamorphoten bei der Aufnahme komprimierten Bildpaare, bei der Projektion wieder durch Zylinderanamorphoten zu dekomprimieren, wurde bei diesem Projektor diese Technik verlassen. Es wurden zur Dekompression Prismenanamorphoten von Brewster-Typ verwendet. Die daraus entstehenden Vorteile sind bekannt.

Bei allen diesen Projektionen auf übergrosse Projektionsflächen tritt noch der Nachteil einer markant geringen Lichtausbeute aus der Beleuchtungsvorrichtung auf. Dies hängt zu einem grossen Teil mit den Filtern zusammen, die einmal im Objektiv eines solchen Projektionsapparates angeordnet sind und mit den Polarisationsfiltern der Brille, die jeder Zuschauer trägt, in der ungefähr die Hälfte der Lichtausbeute pro Polarisationskanal verloren geht. Ausserdem sind die Projektionsflächen extrem gross, so dass die Bildausleuchtung nicht mehr als besonders gut zu bezeichnen ist. Man versuchte schon seit längerer Zeit, diesen Nachteil durch verstärkte Beleuchtungskörper zu überwinden. Nachteilig dabei ist, dass die Ausleuchtung eines stereoskopischen Bildpaares in der Filmebene ebenfalls Lichtverluste mit sich bringt.

Es ist Aufgabe der Erfindung ein afokales Vorsatzsystem zur Vergrösserung des Bildwinkels eines Grundobjektivs anzugeben, welches gemeinsam mit diesem zur Wiedergabe von Weitwinkel-Stereobildern, wobei simultan die anamorphotische Dekompression durchgeführt wird, auf einer sphärischen Projektionsfläche geeignet ist.

Die Aufgabe wird durch das im kennzeichnenden Teil des Patentanspruchs 1 definierte Vorsatzsystem gelöst.

Die Erfindung wird nun anhand des in den beiden Figuren dargestellten Ausführungsbeispiels näher erläutert. Es zeigen:

Fig. 1 die Vorrichtung zur Beleuchtung von stereoskopischen Bildpaaren und

Fig. 2 Grundobjektiv, Prismenvorsatz und afokales Vorsatzsystem gemäss der Erfindung zur Projektion von stereoskopischen Bildpaaren auf eine sphärische Breitwandfläche.

Wie schon erwähnt, kann mit dieser Einrichtung ein normaler handelsüblicher Kinoprojektor zu einer Projektionsvorrichtung für stereoskopische, anamorphotisch komprimierte Bildpaare auf extrem grosse, sphärisch gekrümmte Breitwandflächen aufgewertet werden. Das Problem besteht darin, die von den Lichtquellen abgegebene Energie im sichtbaren Spektrum möglichst quantitativ der Bildbühne zuzuführen und schliesslich die durchstrahlten Bildpaare anamorphotisch zu entzerren und bei genügender Lichtstärke auf die übergrosse Leinwand zu projizieren, also diese Leinwand voll auszuleuchten.

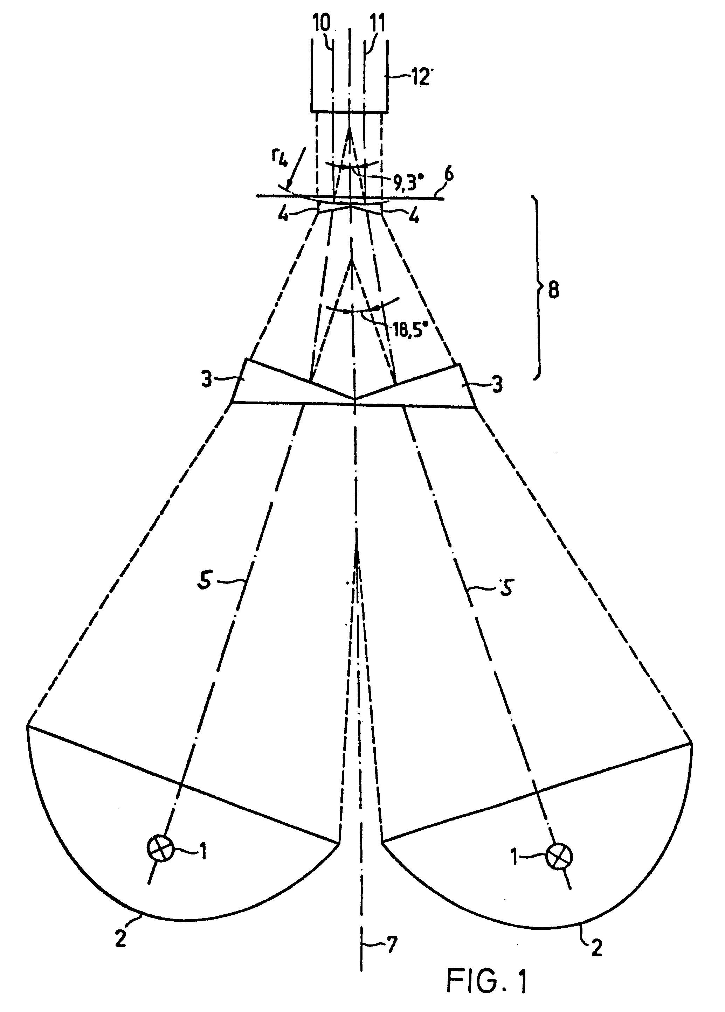

Fig. 1 zeigt in der Draufsicht die Beleuchtungsvorrichtung zur Beleuchtung von stereoskopischen Bildpaaren. Diese Vorrichtung besteht aus zwei Xenon-Hochdruckbogenlampen von z.B. je vier Kilowattleistung.

Jede dieser Bogenlampen ist von einem Elippsoidspiegel 2 so umgeben, dass die Lichtstrahlen, wie gestrichelt angedeutet, in Richtung der optischen Achse 5 zum ersten Umlenkprisma 3 gelangen. Jeder der Ellipsoidspiegel besitzt die Brennweiten von im wesentlichen 60 mm und 540 mm. Der Durchmesser des Spiegels an seinem Rand beträgt ca. 280 mm. Die Figur zeit ferner, dass die Bogenlampen 1 und Spiegel 2 symmetrisch zu einer Symmetrieebene 7 angeordnet sind. Der Winkel zwischen der Symmetrieebene 7 und den optischen Achsen 5 beträgt im vorliegenden Ausführungsbeispiel 18,5°. Selbstverständlich kann der Winkel je nach räumlichen Dimensionen eines Ausführungsbeispiels sich von diesem angegebenen Winkelwert unterscheiden. Das erste Umlenkprisma kann aus Quarz mit einem Keilwinkel von 19,56° oder aus dem Material «ZK N7» mit einem Keilwinkel von 17,5° ausgeführt werden. Bei der Quarzausführung beträgt die Brechzahl für die Heliumlinie $n_d = 1,458$ und die Abbesche Zahl $v_d =$ ca. 67. Bei der Ausführung mit dem Material «ZK N7» beträgt die Brechzahl für die Heliumlinie $n_d = 1,5085$ und Abbesche Zahl $v_d = 61,19$. Für jede der optischen Achsen ist ein erstes Umlenkprisma 3 vorgesehen. Die optische Achsenrichtung wird hierdurch auf einen Winkel von 9,3° zur Symmetrieebene 7 umgelenkt, was in der Zeichnung gestrichelt ist. Das Licht gelangt nun bereits eng gebündelt in den Bereich 8, der z.B. die mechanischen Blenden des Filmprojektors enthalten kann. Am Ende des Bereichs 8 befindet sich ein zweites Umlenkprisma 4, wobei für jede der optischen Achsen ein solches zweites Umlenkprisma vorgesehen ist. Dieses kann entweder aus Quarz mit der Brechzahl $n_d = 1,458$ oder der Abbeschen Zahl $v_d = 67$ oder aus dem Material «Tempax» Mit der Brechzahl $n_d = 1,485$ und $v_d =$ ca. 62 bestehen.

Im zweiten Umlenkprisma 4 aus «Tempax» mit einem Keilwinkel von 18,2° wird unmittelbar vor der Filmebene 6 die optische Beleuchtungsachse parallel zur Symmetrieebene 7 gerichtet. Der Lichtkegel wird durch einen sphärischen Hohlschliff im zweiten Umlenkprisma gestreckt. Dieser sphärische Hohlschliff ist auf der Seite des zweiten Umlenkprismas 4 angebracht, die zur Projektionsoptik 12 zeigt. Der Radius des Hohlschliffes ist im vorliegenden Beispiel $r_4 = 146$ mm. Der optische Radius richtet sich nach der verwendeten Bogenlampe 1. In der Filmebene 6 wird das stereoskopische Bildpaar vollständig und optimal ausgeleuchtet. Beleuchtungsverluste treten nun nicht mehr auf.

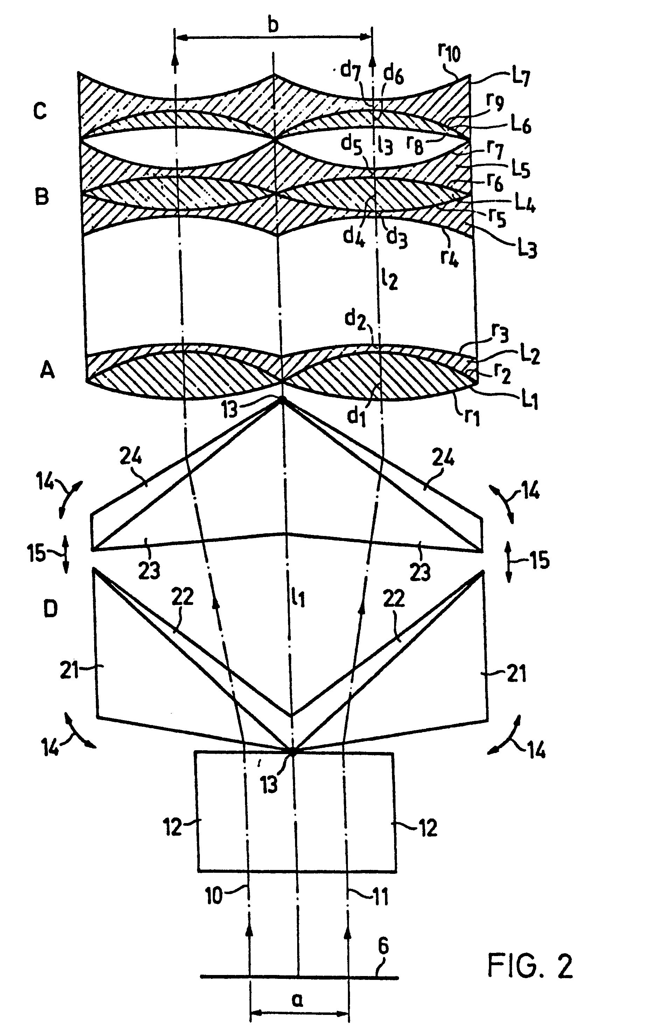

Fig. 2 zeigt nun in teilweiser Schnittdarstellung das nach der Grundoptik angeordnete erfindungsgemässe Vorsatzsystem, welches mit der Beleuchtungsvorrichtung optisch zusammenwirkt.

Auf den in der Bildebene 6 durchlaufenden Film ist das stereoskopische Bildpaar aufgezeichnet. Üblicherweise haben solche Filme eine Breite von 35 mm oder 70 mm. Der Mittenabstand an den beiden Bildern beträgt entweder die typischen 13 mm oder 26 mm. Hinter dem Film ist, wie beschrieben, die Beleuchtungsvorrichtung gemäss Fig. 1 angeordnet. In der Zeichnung sind die optischen Achsen 10, 11 für die beiden Bilder strichpunktiert gezeichnet. Für jedes Bild ist ein sogenanntes Grundobjektiv 12 für die Projektion vorgesehen, wobei dieses Grundobjektiv optisch als dem auszurüstenden Projektor zugehörig betrachtet werden kann. Jedem dieser Grundobjektive 12 schliesst sich ein erstes Prismenpaar 21, 22 an, das aus verschiedenen optischen Materialien besteht und die dargestellte Form hat. Die beiden Teilprismen 21, 22 sind miteinander verkittet. Hierdurch wird die optische Achse der Lichtstrahlen nach rechts und links abgelenkt. In Richtung der Lichtstrahlen folgt nun ein zweites Prismenpaar, das aus den Teilprismen 23, 24 besteht, die eine ähnlich bis gleiche Form und auch Wirkungsweise haben wie das erste Prismenpaar. Das zweite Prismenpaar 23, 24 ist im Abstand $l_1$ vom ersten Prismenpaar 21, 22 entfernt. Dieser Abstand kann entweder verlängert oder verkürzt werden, was durch den Doppelpfeil 15 angedeutet ist. Die Mechanismen zu einer solchen Verschiebung der Prismenpaare zueinander sind allgemein bekannt und werden hier nicht näher besprochen. Durch die Veränderung des Abstands $l_1$ zwischen den Prismenpaaren kann die Strecke b vergrössert oder verringert werden. Dies hängt von der Baubreite der nachfolgenden Linsenglieder A, B, C ab. Die Prismenpaare 21, 22 und 23, 24 können ausserdem in ihrem entsprechenden Drehpunkt 13 verschwenkt werden. Durch diese Verschwenkung, die mittels der Doppelpfeile 14 angedeutet sind, kann die Konvergenz der auf die kugelförmige Projektionswand projizierten Stereobilder so eingestellt werden, dass sie ohne einen störenden optischen Eindruck die beste Stereowirkung zeigen.

Den in Fig. 2 dargestellten oberen Prismenpaaren 23, 24 folgt für jedes der beiden Stereobilder 10, 11 eine Anordnung aus drei Linsengliedern A, B, C. Diese Linsenglieder haben die gleichen Werte für jedes Bild bzw. für jeden Bildkanal. Daher sind die Bezugszahlen der verschiedenen konstruktiven Merkmale der Linsenglieder nur für die rechte Anordnung gezeichnet. Die folgende Beschreibung und Tabelle gelten auch für die linke Anordnung. Das erste Glied ist positiv und besteht auch aus einer bikonvexen Linse $L_1$ und einer konkav/konvex geformten Linse $L_2$. Hieran schliesst sich ein Luftraum mit dem Abstand $l_2$. Das zweite Glied B hat eine negative Wirkung und besteht aus einer bikonkaven Linse $L_3$, bikonvexen Linse $L_4$ und bikonkaven Linse $L_5$. Das dritte Linsenglied C ist vom zweiten Linsenglied B durch einen Luftraum $l_3$ getrennt. Das dritte Linsenglied hat einen negativen Strahlengang und besteht aus einem Meniskus $L_6$ und aus einer bikonkav geformten Linse $L_7$. Es folgen nun die bekannten Polarisationsfilter, die nicht dargestellt sind. Das Stereobildpaar wird mit dem Basisabstand b auf die kugelförmige Projektionsfläche, die in Form einer Halbkugel aufgestellt ist, projiziert.

Es folgt nun die Tabelle der konstruktiven Daten des dargestellten Objektivs:

| | | | $n_d$ | $v_d$ |
|---|---|---|---|---|
| Teilprisma 1 | | | 1,622801 | 56,90 |
| Teilprisma 2 | | | 1,620040 | 36,37 |
| gesamter Keilwinkel 14° | | | | |
| Teilprisma 3 | | | 1,622801 | 56,90 |
| Teilprisma 4 | | | 1,620040 | 36,37 |
| gesamter Keilwinkel 17° | | | | |
| A $L_1$ $r_1 = +89,05$ $r_2 = -80,50$ | $d_1 = 18$ | | 1,620411 | 60,23 |
| $L_2$ $r_3 = -260,50$ | $d_2 = 2,3$ $l_2 = 31$ | | 1,755201 | 27,58 |
| B $L_3$ $r_4 = -90$ $r_5 = +154$ | $d_3 = 3$ | | 1,620411 | 60,23 |

| | | | $n_d$ | $v_d$ |
|---|---|---|---|---|
| $L_4$ | $r_6 = -154$ | $d_4 = 13$ | 1,755201 | 27,58 |
| $L_5$ | $r_7 = +72$ | $d_5 = 3$ | 1,620411 | 60,23 |
| | | $l_3 = 19$ | | |
| C $L_6$ | $r_8 = -190$ | $d_6 = 6$ | 1,755201 | 27,58 |
| | $r_9 = -86$ | | | |
| $L_7$ | $r_{10} = +178$ | $d_7 = 3$ | 1,620411 | 60,23 |

In dieser Tabelle sind mit r die Radien und mit d die Dicken der einzelnen Linsen in mm angegeben. Ebenfalls sind die Dicken l der Lufträume in mm angegeben. Die Brechzahl $n_d$ bezieht sich auf die Helium-Linie. $v_d$ bezeichnet die Abbesche Zahl.

**Patentanspruch**

1. Afokales Vorsatzsystem zur Vergrösserung des Bildwinkels eines Grundobjektivs (12), das bei Verwendung als Projektionsvorsatz in Lichtrichtung gesehen ein positives und zwei negative freistehende Glieder (A, B, C) aufweist, gekennzeichnet durch folgende optische Daten:

| | | | $n_d$ | $v_d$ |
|---|---|---|---|---|
| A $L_1$ | $r_1 = +89,05$ | $d_1 = 18$ | 1,620411 | 60,32 |
| | $r_2 = -80,50$ | | | |
| $L_2$ | $r_3 = -260,50$ | $d_2 = 2,3$ | 1,755201 | 27,58 |
| | | $l_2 = 31$ | | |
| B $L_3$ | $r_4 = -90$ | $d_3 = 3$ | 1,620411 | 60,23 |
| | $r_5 = +154$ | | | |
| $L_4$ | $r_6 = -154$ | $d_4 = 13$ | 1,755201 | 27,58 |
| $L_5$ | $r_7 = +72$ | $d_5 = 3$ | 1,620411 | 60,23 |
| | | $l_3 = 19$ | | |
| C $L_6$ | $r_8 = -190$ | $d_6 = 6$ | 1,755201 | 27,58 |
| | $r_9 = -86$ | | | |
| $L_7$ | $r_{10} = +178$ | $d_7 = 3$ | 1,620411 | 60,23 |

**Claim**

1. Afocal attachment system for increasing the angular coverage of a basic lens (12) which, when used as a projection attachment considered in the light direction, has one positive and two negative free-standing elements (A, B, C), characterized by the following optical data:

| | | | $n_d$ | $v_d$ |
|---|---|---|---|---|
| A $L_1$ | $r_1 = +89,05$ | $d_1 = 18$ | 1,620411 | 60,32 |
| | $r_2 = -80,50$ | | | |
| $L_2$ | $r_3 = -260,50$ | $d_2 = 2,3$ | 1,755201 | 27,58 |
| | | $l_2 = 31$ | | |

|   |   |   |   | $n_d$ | $v_d$ |
|---|---|---|---|---|---|
| B | $L_3$ | $r_4 = -90$ <br> $r_5 = +154$ | $d_3 = 3$ | 1,620411 | 60,23 |
|   | $L_4$ | $r_6 = -154$ | $d_4 = 13$ | 1,755201 | 27,58 |
|   | $L_5$ | $r_7 = +72$ | $d_5 = 3$ | 1,620411 | 60,23 |
|   |   |   | $l_3 = 19$ |   |   |
| C | $L_6$ | $r_8 = -190$ <br> $r_9 = -86$ | $d_6 = 6$ | 1,755201 | 27,58 |
|   | $L_7$ | $r_{10} = +178$ | $d_7 = 3$ | 1,620411 | 60,23 |

**Revendication**

1. Objectif additionel pour l'agrandissement de l'angle d'image d'un objectif de base (12) qui, lorsqu'il est utilisé comme objectif de projection, comporte, vus dans le sens de la lumière, un systeme positif et deux systèmes négatifs (A, B, C), caractérisé par les paramètres optiques suivants:

|   |   |   |   | $n_d$ | $v_d$ |
|---|---|---|---|---|---|
| A | $L_1$ | $r_1 = +89,05$ <br> $r_2 = -80,50$ | $d_1 = 18$ | 1,620411 | 60,32 |
|   | $L_2$ | $r_3 = -260,50$ | $d_2 = 2,3$ | 1,755201 | 27,58 |
|   |   |   | $l_2 = 31$ |   |   |
| B | $L_3$ | $r_4 = -90$ <br> $r_5 = +154$ | $d_3 = 3$ | 1,620411 | 60,23 |
|   | $L_4$ | $r_6 = -154$ | $d_4 = 13$ | 1,755201 | 27,58 |
|   | $L_5$ | $r_7 = +72$ | $d_5 = 3$ | 1,620411 | 60,23 |
|   |   |   | $l_3 = 19$ |   |   |
| C | $L_6$ | $r_8 = -190$ <br> $r_9 = -86$ | $d_6 = 6$ | 1,755201 | 27,58 |
|   | $L_7$ | $r_{10} = +178$ | $d_7 = 3$ | 1,620411 | 60,23 |

0 146 770

FIG. 1

0 146 770

FIG. 2